(19) Europäisches Patentamt

European Patent Office

Office européen des brevets

(11) EP 0 554 745 B1

(12) EUROPÄISCHE PATENTSCHRIFT

(45) Veröffentlichungstag und Bekanntmachung des Hinweises auf die Patenterteilung:
05.03.1997 Patentblatt 1997/10

(51) Int Cl.6: **C08G 18/70**, C08G 18/30, C08G 18/80, C09D 175/02

(21) Anmeldenummer: 93101070.6

(22) Anmeldetag: 25.01.1993

(54) **Verfahren zur Herstellung von Beschichtungen**

Process for the production of coatings

Procédé pour la préparation des revêtements

(84) Benannte Vertragsstaaten:
AT BE CH DE ES FR GB IT LI NL SE

(30) Priorität: 05.02.1992 DE 4203217

(43) Veröffentlichungstag der Anmeldung:
11.08.1993 Patentblatt 1993/32

(73) Patentinhaber: BAYER AG
51368 Leverkusen (DE)

(72) Erfinder:
• Kubitza, Werner, Dipl.-Ing.
W-5090 Leverkusen 3 (DE)
• Roschu, Rolf, Dipl.-Ing.
W-4156 Willich 2 (DE)
• Zöllner, Franz Ferdinand
W-5090 Leverkusen (DE)
• Laas, Hans Josef, Dr.
W-5000 Köln 60 (DE)

(56) Entgegenhaltungen:
EP-A- 0 013 112     EP-A- 0 486 881
EP-A- 0 516 277     GB-A- 1 444 933
GB-A- 2 018 796     US-A- 3 428 592

**Beschreibung**

Die Erfindung betrifft ein neues Verfahren zur Herstellung von Beschichtungen auf beliebigen wasserresistenten Substraten unter Verwendung eines wäßrigen Beschichtungsmittels, dessen Bindemittel im wesentlichen aus einem hydrophil modifizierten, wasserverträglichen Polyisocyanat mit freien Isocyanatgruppen besteht.

Freie NCO-Gruppen enthaltende Formulierungen aus Polyisocyanaten wie auch Isocyanat-Prepolymeren sind seit langem bekannt. Sie härten durch den Einfluß von Feuchtigkeit unter Bildung N-substituierter Polyharnstoff-Verbindungen. Solche Produkte bilden im wesentlichen die Basis für die Einkomponenten-Polyurethan-Beschichtungstechnologie (vgl. z.B. Kunststoff Handbuch, Band 7, "Polyurethane", Carl Hanser Verlag München/Wien (1983) Seiten 545 ff.).

Bindemittel für diese Technologie können aus Prepolymeren bestehen, die aus zwei- bis mehrfunktionellen Isocyanat-Verbindungen durch Umsetzung mit im wesentlichen zwei- und/oder mehrfunktionellen Alkoholen hergestellt werden. Das NCO/OH-Äquivalentverhältnis bei der Herstellung der Prepolymeren ist dabei so bemessen, daß die Prepolymere in organischen Lösemitteln löslich sind, außerdem aber noch freie NCO-Gruppen enthalten, die sich nach Auftrag auf eine Unterlage mit Luftfeuchtigkeit zu räumlich vernetzten Polyharnstoff-Verbindungen umsetzen. Dabei entstehen Filme mit hoher Vernetzungsdichte und somit einem hohen Eigenschaftsniveau.

Auch übliche "Lackpolyisocyanate", wie sie allgemein als Vernetzer-Komponenten in Zweikomponenten-Polyurethanlacken zum Einsatz gelangen, sind für diese Technologie brauchbar, soweit sie über das vom Markt geforderte Eigenschaftsspektrum verfügen. Solche "Lackpolyisocyanate" enthalten üblicherweise Urethan-, Isocyanurat-, Uretdion-, Biuret- oder Allophanatgruppen.

Da sowohl die beschriebenen NCO-haltigen Prepolymeren wie auch Lackpolyisocyanate bei Raumtemperatur Viskositäten von über 2000 mPa.s aufweisen, benötigen sie zur Einstellung auf eine formulier- und verarbeitungsgerechte Viskosität noch Anteile organischer Lösemittel, wobei der Anteil um so größer sein muß, je höher die Viskosität des Polyisocyanates bzw. des Prepolymeren ist. Aus ökologischen und sicherheitstechnischen Gründen (Brandgefahren) geht die Verwendung von organischen Lösungsmittel enthaltenden Beschichtungsmitteln in der Praxis immer mehr zurück. Statt dessen werden wäßrige Beschichtungsmittel für die Beschichtung der unterschiedlichsten Substrate in immer größerem Umfang eingesetzt.

Der Gedanke, organische Polyisocyanate mit freien Isocyanatgruppen in Analogie zu den genannten lösungsmittelhaltigen Einkomponenten-Systemen als Bindemittel für wäßrige Lacke einzusetzen, erschien bislang völlig abwegig, da einerseits derartige Bindemittel unter dem Einfluß von Feuchtigkeit aushärten und andererseits in wäßrigen, gebrauchsfertigen Lacken ein Überangebot an Wasser vorliegt, so daß die Herstellbarkeit von wäßrigen Lacken auf Basis von Polyisocyanaten mit freien Isocyanatgruppen als im wesentlichen einziger Bindemittelkomponente völlig unmöglich erschien. Die Tatsache, daß wäßrige Zweikomponenten-Polyurethanlacke bekannt geworden sind, ändert nichts an der grundsätzlichen Richtigkeit dieser Feststellung, da in diesen vorbekannten Systemen einerseits ausgewählte Polyhydroxylverbindungen und andererseits vorzugsweise hydrophobe Polyisocyanate eingesetzt werden, so daß eine gewisse Umhüllung des Polyisocyanats durch die organische Polyhydroxylverbindung angenommen werden kann, und eine Reaktion zwischen den freien Isocyanatgruppen und dem, die kontinuierliche Phase der Emulsionen bildenden Wasser weitgehend ausgeschlossen werden kann.

Überraschend wurde jetzt jedoch gefunden, daß bestimmte Polyisocyanate oder Polyisocyanatgemische der nachstehend näher beschriebenen Art in hydrophilierter Form ausgezeichnete Bindemittel für wäßrige Beschichtungsmittel mit einer für die Praxis ausreichend hoher Verarbeitungszeit darstellen.

Gegenstand der Erfindung ist daher ein Verfahren zur Herstellung von Beschichtungen auf beliebigen wasserresistenten Substraten unter Verwendung eines wäßrigen Beschichtungsmittels, bestehend im wesentlichen aus

a) einem Bindemittel,

b) Wasser,
und gegebenenfalls

c) üblichen, aus der Beschichtungstechnologie bekannten Hilfs- und Zusatzmitteln,

dadurch gekennzeichnet, daß das Bindemittel a) ein unter dem Einfluß von Feuchtigkeit unter Ausbildung von Polyharnstoffstrukturen aushärtbares, aufgrund einer hydrophilen Modifizierung mit Wasser verträgliches organisches Polyisocyanat mit einem NCO-Gehalt von 10 bis 23 Gew.-% oder ein Gemisch mehrer derartiger Polyisocyanate darstellt.

Als Bindemittelkomponente a) kommen hydrophil modifizierte Polyisocyanate oder hydrophil modifizierte isocyanatgemische zum Einsatz, wobei, im Falle der Verwendung von Gemischen, auch solche aus hydrophil modifizierten Polyisocyanaten und nicht hydrophil modifizierten verwendet werden können, vorausgesetzt, die Hydrophilie des hydrophil modifizierten Polyisocyanats ist ausreichend hoch, um die Wasserverträglichkeit des Gemischs zu bewirken.

Die als Komponente a) zum Einsatz gelangenden Polyisocyanate oder Polyisocyanatgemische weisen bei 23°C eine Viskosität von 100 bis 5000 mPa.s, eine (mittlere) NCO-Funktionalität von 2 bis 4, einen NCO-Gehalt von 10 bis 23 Gew.-% und einen Gehalt an innerhalb von Polyetherketten angeordneten Ethylenoxideinheiten (berechnet als $C_2H_4O$, Molekulargewicht = 44) von 1 bis 20, vorzugsweise 3 bis 17 Gew.-% auf. Bei den NCO-Gruppen handelt es sich um solche, die an aliphatische bzw. cycloaliphatische, vorzugsweise an aliphatische Kohlenstoffatome gebunden sind.

Die Herstellung der hydrophil modifizierten Polyisocyanate gelingt nach an sich bekannten Methoden durch Umsetzung geeigneter Ausgangspolyisocyanate mit unterschüssigen Mengen an ein- oder mehrwertigen Polyetheralkoholen, deren Polyetherketten zu mindestens 70 Mol-%, vorzugsweise zu mindestens 80 Mol-% aus Ethylenoxideinheiten bestehen.

Geeignete Ausgangsdiisocyanate zur Herstellung der hydrophil modifizierten Polyisocyanate weisen vorzugsweise eine (mittlere) NCO-Funktionalität von 2,1 bis 4,4, vorzugsweise 2,3 bis 4,2 auf. Es handelt sich insbesondere um Polyisocyanate mit ausschließlich (cyclo)-aliphatisch gebundenen Isocyanatgruppen, d.h. um beliebige, durch Modifizierung einfacher (cyclo)aliphatischer Diisocyanate hergestellte Polyisocyanate mit Uretdion und/ oder Isocyanurat-, Urethan- und/oder Allophanat-, Biuret- oder Oxadiazinstruktur, wie sie beispielsweise in den DE-OS'en 1 670 666, 3 700 209 und 3 900 053 oder den EP-A 336 205 oder EP-A 339 396 beispielhaft beschrieben sind.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate. Bevorzugt handelt es sich bei den Ausgangskomponenten um im wesentlichen aus trimerem 1,6-Diisocyanatohexan und gegebenenfalls dimerem 1,6-Diisocyanatohexan bestehende Isocyanuratgruppen und gegebenenfalls Uretdiongruppen aufweisende Polyisocyanatgemisch mit einem NCO-Gehalt von 19 bis 24 Gew.-%. Ebenfalls bevorzugt werden als Ausgangskomponente die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Als hydrophile Polyetheralkohole, die zur Hydrophilierung der beispielhaft genannten Polyisocyanate eingesetzt werden können, eignen sich beispielsweise Alkoxylierungsprodukte ein- oder mehrwertiger Startermoleküle. Als Startermoleküle kommen beispielsweise einwertige Alkohole des Molekulargewichtsbereichs 32 bis 150 wie Methanol, n-Butanol, Cyclohexanol oder 3-Methyl-3-hydroxymethyloxethan oder, weniger bevorzugt, mehrwertige Startermoleküle wie Wasser, Ethylenglykol, Propylenglykol, Glycerin oder Trimethylolpropan in Betracht. Bei der Alkoxylierung wird Ethylenoxid oder ein Gemisch aus Ethylenoxid mit anderen Alkylenoxiden wie beispielsweise Propylenoxid verwendet, vorausgesetzt die entstehenden Polyetheralkohole entsprechen den oben gemachten Ausführungen bezüglich des Gehalts der Polyetherketten an eingebauten Ethylenoxideinheiten. Die Menge der Alkylenoxide wird im übrigen so bemessen, daß die resultierenden Polyetheralkohole im statistischen Mittel mindestens eine Polyetherkette mit mindestens 5, vorzugsweise mindestens 6 Ethylenoxideinheiten pro Molekül aufweisen. Im allgemeinen weisen die als einbaufähige Emulgatoren zum Einsatz gelangenden Polyetheralkohole 6 bis 70, vorzugsweise 6 bis 40 und besonders bevorzugt 6 bis 9 Ethylenoxideinheiten in Form von Polyetherketten auf. Besonders bevorzugte einbaufähige Polyetheralkohole sind reine Polyethylenglykolmonomethyletheralkohole, die im statistischen Mittel 6,0 bis 9,0 Ethylenoxideinheiten pro Molekül aufweisen.

Bei der Hydrophilierung der Polyisocyanate werden die Ausgangspolyisocyanate mit den Polyetheralkoholen in solchen Mengen miteinander unter Urethanbildung zur Reaktion gebracht, daß hydrophilierte Polyisocyanate oder Polyisocyanatgemische a) mit den obengenannten Kenndaten resultieren. Das NCO/OH-Äquivalentverhältnis liegt bei dieser Reaktion im allgemeinen innerhalb des Bereichs von 4:1 bis 120:1, vorzugsweise 6:1 bis 100:1. Die Umsetzung wird im allgemeinen innerhalb des Temperaturbereichs von 20 bis 120°C, vorzugsweise 40 bis 100°C durchgeführt und kann bei Erreichen des theoretisch errechneten NCO-Gehalts als beendet betrachtet werden.

Bei der Komponente b) der erfindungsgemäß zum Einsatz gelangenden Beschichtungsmittel handelt es sich um Wasser. In den Beschichtungsmitteln liegen im allgemeinen pro 100 Gew.-Teilen der Komponente a) 2 bis 400, vorzugsweise 10 bis 100 Gew.-Teile Wasser vor. Je nach Mengenverhältnis der Komponenten a) und b) und in Abhängigkeit von der Konstitution der Komponente a) kann es sich bei den Gemischen aus a) und b) um eine WO-oder um eine OW-Emulsion handeln.

Die Herstellung derartiger Emulsionen ist durch einfaches Vermischen der Ausgangskomponenten ohne Zusatz weiterer Additive, die den Emulgiervorgang unterstützen, möglich, da im allgemeinen eine ausreichende Emulgierfähigkeit durch den genannten Einbau hydrophiler Polyetherketten in das Polyisocyanatmolekül gegeben ist.

Falls das erfindungsgemäß zum Einsatz gelangende Beschichtungsmittel im wesentlichen eine WO-Emulsion darstellt, bildet sich während der Verdunstung des Wassers direkt ein homogener, störungsfreier Film, der innerhalb weniger Stunden unter Einfluß von Feuchtigkeit (anfänglich Restfeuchte der Emulsion, später Einfluß von Luftfeuchtigkeit) und somit Bildung substituierter Polyharnstoff-Verbindungen aushärtet.

Das gleiche wird bei einer OW-Emulsion erreicht, wobei jedoch im Verlauf der Wasserverdunstung die Polyisocyanat-Tröpfchen zunächst zusammenfließen und anschließend zu einer einheitlichen Matrix verlaufen.

In beiden Fällen wird eine leichte Reinigungsfähigkeit der Arbeitsgeräte mit Wasser ermöglicht, da im Falle einer WO-Emulsion dazu die Hydrophilie des Polyisocyanates ausreicht, im Falle einer OW-Emulsion die äußere Phase ohnehin aus Wasser besteht.

Selbstverständlich reagiert ein Teil der NCO-Grupen, sobald der Kontakt mit der Wasserphase gegeben ist, im Topf, d.h. noch vor der Applikation. Diese Reaktion ist jedoch ausreichend langsam, um Topfzeiten der frisch hergestellten Beschichtungsmittel von bis zu 2,5 Stunden zu ermöglichen.

Bei dem erfindungsgemäß verwendeten Beschichtungssystem handelt es sich also um eine wasserverdünnbare Polyisocyanat-Formulierung, die direkt vor der Applikation beliebig mit Wasser auf die gewünschte Verarbeitungskonsistenz eingestellt werden kann und durch den Einfluß von Feuchtigkeit zu einem Film aushärtet der im wesentlichen aus Polyharnstoff-Segmenten besteht. Das schaftsniveau des ausgehärteten Filmes entspricht dem der üblichen, organische Lösemittel enthaltenden feuchtigkeitshärtenden Einkomponenten-Polyurethansysteme.

Die beim erfindungsgemäßen Verfahren zum Einsatz gelangenden Beschichtungsmittel können, gegebenenfalls, weitere Hilfs- und Zusatzmittel c) enthalten. Hier sind insbesondere c1) Pigmente zu nennen. Bei der Herstellung pigmentierter Einstellungen sind sowohl die für wäßrige wie auch für nicht wäßrige Systeme üblichen Pigment-Dispergierverfahren möglich.

So kann man z.B. unter Verwendung von Trocknungsmitteln, wie sie in der Polyurethan-Lacktechnologie üblich sind (Zusatzmittel TI, Bayer AG Leverkusen, (p-Toluylsulfonylmonoisocyanat)) das Pigment in die Polyisocyanat-Komponente eindispergieren.

Andererseits ist es möglich, das Pigment als wäßrige "Pigmentanreibung", d.h. eine "Slurry" in einer wäßrigen Lösung von Verdicker und gegebenenfalls Pigmentbenetzungshilfen zu formulieren und kurz vor der Verarbeitung mit der Polyisocyanat-Komponente zu homogenisieren.

Weitere gegebenenfalls mitzuverwendende Hilfs- und Zusatzmittel sind beispielsweise c2) gegenüber Isocyanatgruppen inerte Lösungsmittel wie beispielsweise aromatische Kohlenwasserstoffe, die zum Lösen anderer Hilfsmittel oder auch zur Viskositätserniedrigung der isocyanatkomponente a) vor der Herstellung der wäßrigen Emulsion eingesetzt werden können. Der Anteil an derartigen Lösungsmitteln liegt jedoch bei maximal 5 Gew.-%, bezogen auf das Gesamtgewicht der beim erfindungsgemäßen Verfahren eingesetzten Beschichtungsmittel.

Weitere Hilfs- und Zusatzmittel sind beispielsweise Katalysatoren für die $NCO/H_2O$-Reaktion wie beispielsweise Dibutylzinndilaurat, Verlaufmittel, Entschäumer, Füllstoffe oder Mattierungsmittel der an sich bekannten Art.

Die Applikation der gebrauchsfertigen Beschichtungsmittel bei der Durchführung des erfindungsgemäßen Verfahrens erfolgt nach den üblichen Methoden (Spritzen, Tauchen, Streichen usw.) der Beschichtungstechnologie. Geeignete Substrate sind beispielsweise Beton, Estrich, Holz, Glas, diverse Metalle und Kunststoffe.

Nach der Applikation des verarbeitungsfertigen Gemisches, z.B. in Naßfilm-Schichtdicken von 100 bis 200 μm beginnt die Verdunstung des Wassers, und es bildet sich ein gleichmäßiger transparenter Film. Nach 30 bis 60 Minuten bei RT ist die Verdunstung des Wassers im wesentlichen beendet, die Matrix erreicht Gewichtskonstanz. Für die Durchhärtung, also die Weiterreaktion, steht nun die Luftfeuchtigkeit zur Verfügung, so wie es auch bei konventionellen, lösungsmittelhaltigen, feuchtigkeitshärtenden Einkomponenten-Polyurethanlacken üblich ist.

Je nach Reaktivität des Polyisocyanates und eventuellen Einsatzes von Reaktionsbeschleunigern erhält man Beschichtungen, die innerhalb von 0,5 bis 8 Stunden staubtrocken und 4 bis 24 Stunden griffest sind.

Gemäß einer besonderen Ausführungsform des erfindungsgemäßen Verfahrens können unter Verwendung von Sand unterschiedlicher Granulometrie inklusive Bunt- oder Ziersand und/oder unter Verwendung von Kies bzw. Zierkies und/oder von Blähton-Granulat oder ähnlichen granulierten Mineralien mit Korngrößen bis zu 10 mm und/oder unter Verwendung von Kunststoffgranulaten als Komponente c), gegebenenfalls neben weiteren Hilfs- und Zusatzmitteln c) Zierbeschichtungen hergestellt werden, die in Schichten von bis zu mehreren Zentimetern auf geeignete Substrate aufgetragen werden können. Anwendungsgebiete sind beispielsweise die Herstellung von bodenbeschichtungen, Schwimmbadumrandungen, rutschfesten Beschichtungen von Treppenstufen, Rampen oder Arbeitsbühnen.

Das hydrophile Polyisocyanat a) wird hierbei in beträchtlichem Unterschuß angewendet und dient als Bindemittel für das Granulat. Zur Herstellung entsprechender Beschichtungsmittel wird das hydrophile Polyisocyanat mit Wasser auf die erforderliche Konsistenz verdünnt, mit dem Granulat und gegebenenfalls sonstigen Hilfs- und Zusatzmitteln gemischt und dann auf die zu beschichtende Grundlage aufgetragen. Bei saugfähigen Untergründen kann zur Optimierung der Haftung eine transparente, ungefüllte Grundierung auf gleicher Bindemittelbasis aufgetragen werden.

Die Konzentration des hydrophilen Polyisocyanats a) in der wäßrigen Bindemittellösung liegt bei dieser Anwendung im allgemeinen bei 30 bis 90, vorzugsweise 60 bis 80 Gew.-%. Pro 100 Gew.-Teilen der genannten Füllstoffe werden im allgemeinen 2 bis 20, vorzugsweise 2 bis 10 Gew.-Teile Polyisocyanat-Feststoff eingesetzt.

Nach der Aushärtung der Beschichtung kann die abschließende Versiegelung der Oberfläche beispielsweise auf gleicher Bindemittel-Basis erfolgen.

In den nachfolgenden Beispielen beziehen sich alle Prozentangaben auf das Gewicht.

## Beispiele

In den nachfolgenden Beispielen werden folgende Polyisocyanate verwendet:

## Polyisocyanat A:

Isocyanuratgruppen aufweisendes Polyisocyanat auf Basis von 1,6-Diisocyanatohexan mit einem NCO-Gehalt von 21,5 Gew.-%, einer mittleren NCO-Funktionalität von 3,8 und einer Viskosität von 3000 mPa.s (23°C). Das nicht hydrophil modifizierte Polyisocyanat wird lediglich in mit Polyisocyanat B abgemischter Form verwendet.

## Polyisocyanat B:

1,0 Val Polyisocyanat A werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein erfindungsgemäßes, praktisch farbloses klares Polyisocyanatgemisch vor. Der NCO-Gehalt beträgt 17,3 %, der Gehalt an Ethylenoxideinheiten beträgt 11,3 % und die Viskosität 3 050 mPas (23°C).

## Beispiel 1

200 Gewichtsteile Wasser werden mit 9 Gewichtsteilen eines handelsüblichen Dispergierhilfsmittels (®Disperbyk 182, Firma Byk, Wesel) sorgfältig verrührt und diesem Gemisch anschließend 300 Gewichtsteile eines handelsüblichen verkollerten Mischpigmentes (®SICOMIX grau RAL 7032, Firma BASF AG, Ludwigshafen) zugesetzt. Es erfolgt nun eine Dispergierung unter dem Dissolver während 30 Minuten mit einer Drehgeschwindigkeit von 15 bis 20 m/sek. Zur Unterstützung des Dispergierprozesses werden dem Ansatz Glasperlen zugesetzt. Nach Sieben und Abkühlen werden dieser Formulierung 2 Gewichtsteile eines handelsüblichen Entschäumers/Byk 023, Firma Byk, Wesel) und 9 Gewichtsteile einer 20 gew.-%igen Lösung eines handelsüblichen Polyurethan-Verdickers (®Acrysol RM 8, Firma Rohm U. Haas, Frankfurt) zugefügt und verrührt. Man erhält so die Stammkomponente für ein wasserverdünnbares Zweikomponenten-Anstrichsystem mit praktisch unbegrenzter Lagerstabilität. Nach Zugabe von 400 Gewichtsteilen Polyisocyanat B, welches mit 8 Gewichtsteilen einer handelsüblichen 10 gew.-%igen Katalysatorlösung in Solvesso 100 (Dibutylzinndilaurat, Fa. Akzo, Düren) vermischt wird, erhält man ein wasserverdünnbares, erfindungsgemäß verwendbares Beschichtungsmittel, welches sich wie folgt zusammensetzt:

| | |
|---|---|
| Polyisocyanat B fest | 43,2 Gew.-% |
| Additive | 1,4 Gew.-% |
| Pigment | 32,4 Gew.-% |
| Wasser | 22,2 Gew.-% |
| Lösemittel | 0,8 Gew.-% |
| Gesamt | 100,0 Gew.-% |
| | |
| Gesamtfeststoff | 77 Gew.-% |

Falls gewünscht, kann der oben beschriebene Ansatz mit Wasser auf die gewünschte Verarbeitungskonsistenz eingestellt werden. Organische Lösemittel sind dazu nicht erforderlich. Der oben angegebene Ansatz enthält weniger als 1 Gew.-% organisches Lösemittel. Der verarbeitungsfertige Lack wird in einer Naßfilm-Schichtdicke von 200 µm (= 80 bis 90 µm trocken) auf Glasplatten appliziert. Der getrocknete Film ist seidenglänzend und störungsfrei. Nach Ablauf von 10 bis 14 Tagen ist der Härtungsprozeß abgeschlossen. Die Eigenschaften des Fertiglackes und des Filmes können wie folgt skizziert werden:

```
Gelierzeit:                        1,5 bis 2 h

Antrocknung (Sand):                4 bis 8 h

Durchtrocknung (klebfrei):         8 bis 24 h

Optik:                             gut (Seidenglanz)

Pendelhärte (Albert/König):        120 s



Lösemittelbeständigkeit

          Testbenzin:               sehr gut

          Solventnaphtha 100:       sehr gut

          Methoxybutylacetat:       sehr gut

          Aceton:                   sehr gut

          Ethanol:                  sehr gut
```

Wird der Lack nach einer Ablüftzeit von 30 Minuten bei Raumtemperatur 1 Stunde bei 140°C in Gegenwart von Feuchtigkeit (Wasserschale) forciert gehärtet, ergibt sich folgendes Eigenschaftsbild:

| Optik: | gut (Seidenglanz) |
|---|---|
| Pendelhärte: | 90 bis 100 s |
| Lösemittelbeständigkeit | |
| Testbenzin: | sehr gut |
| Solventnaphtha 100: | sehr gut |
| Methoxybutylacetat: | sehr gut |
| Aceton: | sehr gut |
| Ethanol: | sehr gut |

Beispiel 2

200 Gewichtsteile Wasser werden mit 9 Gewichtsteilen eines handelsüblichen Dispergierhilfsmittels (®Disperbyk 182, Fa. Byk, Wesel) sorgfältig verrührt und diesem Gemisch anschließend 300 Gewichtsteile eines handelsüblichen verkollerten Mischpigmentes (®Sicomix grau, Ral 7032, Fa. BASF AG, Ludwigshafen) zugesetzt. Es erfolgt nun eine Dispergierung unter dem Dissolver während 30 Minuten mit einer Drehgeschwindigkeit von 15 bis 20 m/Sek. Zur Unterstützung des Dispergierprozesses werden dem Ansatz Glasperlen zugesetzt. Nach Sieben und Abkühlen werden dieser Formulierung 2 Gewichtsteile eines handelsüblichen Entschäumers (Byk 023, Fa. Byk, Wesel) und 9 Gewichtsteile einer 20 gew.-%igen Lösung eines handelsüblichen Polyurethan-Verdickers (®Acrysol RM 8, Fa. Rohm und Haas, Frankfurt) zugefügt und verrührt, Man erhält so die Stammkomponente für ein wasserverdünnbares, erfindungsgemäß geeignetes Anstrichsystem mit praktisch unbegrenzter Lagerstabilität. Nach Zugabe eines Gemischs aus 200 Gewichtsteilen Polyisocyanat A und 200 Gewichtsteilen Polyisocyanat B, welches mit 8 Gewichtsteilen einer handelsüblichen 10 gew.-%igen Katalysatorlösung in ®Solvesso 100 (Dibutylzinndilaurat, Fa. Akzo, Düren) vermischt wurde, erhält man einen wasserverdünnbaren Zweikomponenten-Polyharnstofflack, der sich wie folgt zusammensetzt:

| Polyisocyanat A/B | 43,2 Gew.-% |
|---|---|
| Additive | 1,4 Gew.-% |
| Pigment | 32,4 Gew.-% |

(fortgesetzt)

| | |
|---|---|
| Wasser | 22,2 Gew.-% |
| Lösemittel | 0,8 Gew.-% |
| Gesamt | 100,0 Gew.-% |
| | |
| Gesamtfeststoff | 77 Gew.-% |

Falls gewünscht, kann der oben beschriebene Ansatz mit Wasser auf die gewünschte Verarbeitungskonsistenz eingestellt werden. Organische Lösemittel sind dazu nicht erforderlich. Der oben angegebene Ansatz enthält weniger als 1 Gew.-% organisches Lösemittel. Der verarbeitungsfertige Lack wird in einer Naßfilm-Schichtdicke von 200 µm (= 80 bis 90 µm trocken) auf Glasplatten appliziert. Der getrocknete Film ist seidenglänzend und störungsfrei. Nach Ablauf von 10 bis 14 Tagen ist der Härtungsprozeß abgeschlossen. Die Eigenschaften des Fertiglackes und des Filmes können wie folgt skizziert werden:

| | |
|---|---|
| Gelierzeit: | 2 bis 2,5 h |
| Antrocknung (Sand): | 8 bis 24 h |
| Durchtrocknung (klebfrei): | 24 bis 32 h |
| Optik (Glanz): | gut (Seidenglanz) |
| Pendelhärte (Albert/König): | 140 s |
| Lösemittelbeständigkeit | |
| Testbenzin: | sehr gut |
| Solventnaphtha 100: | sehr gut |
| Methoxybutylacetat: | sehr gut |
| Aceton: | sehr gut |
| Ethanol: | sehr gut |

Werden die Lacke nach einer Ablüftzeit von 30 Minuten bei Raumtemperatur 1 Stunde bei 140°C in Gegenwart von Feuchtigkeit (Wasserschale) forciert getrocknet, ergibt sich folgendes Eigenschaftsbild:

| | |
|---|---|
| Optik: | gut (Seidenglanz) |
| Pendelhärte: | 90 bis 100 s |
| Lösemittelbeständigkeit | |
| Testbenzin: | sehr gut |
| Solventnaphtha 100: | sehr gut |
| Methoxybutylacetat: | sehr gut |
| Aceton: | gut |
| Ethanol: | sehr gut |

Beispiel 3

100 Gewichtsteile Polyisocyanat B werden mit 40 Gewichtsteilen eines handelsüblichen Pigmentes (Bayertitan R-KB-4, Bayer AG, Leverkusen) vermischt. Zur Langzeitstabilisierung werden noch 4 Gewichtsteile eines handelsüblichen Trockenmittels (Zusatzmittel Ti (Toluylsulfonylmonoisocyanat) Bayer AG, Leverkusen) hinzugefügt, Es erfolgt nun die Homogenisierung des Ansatzes mittels Dissolver während 30 Minuten mit einer Drehgeschwindigkeit von 15 bis 20 m/Sek. Nach Sieben und Abkühlen werden der Formulierung 2 Gewichtsteile einer 10 gew.-%igen Katalysatorlösung in ®Solvesso 100 (Dibutylzinndilaurat, Fa. Akzo, Düren) zugefügt. Man erhält so eine wasserverdünnbare, erfindungsgemäß geeignete Formulierung zur Herstellung einer Polyharnstoffbeschichtung mit praktisch unbegrenzter Lagerstabilität. Nach Zugabe und Homogenisierung von 60 Gewichtsteilen Wasser unmittelbar vor der Verarbeitung resultiert ein verarbeitungsfertiges Material folgender Zusammensetzung:

| Polyisocyanat B | 48,5 Gew.-% |
| Additive | 2,0 Gew.-% |
| Pigment | 19,5 Gew.-% |
| Wasser | 29,1 Gew.-% |
| Lösemittel | 0,9 Gew.-% |
| Gesamt | 100,0 Gew.-% |
| | |
| Gesamtfeststoff | 70,0 Gew.-% |

Falls gewünscht, kann der oben beschriebene Ansatz mit Wasser zusätzlich weiterverdünnt werden, um individuell gewünschte Verarbeitungskonsistenzen zu erhalten. Organische Lösemittel sind dazu nicht erforderlich. Der Ansatz enthält weniger als 1 Gew.-% organisches Lösemittel. Der verarbeitungsfertige Lack wird in einer Naßfilm-Schichtdicke von 200 µm (= 70 bis 80 µm trocken) auf Glasplatten appliziert. Der getrocknete Film ist glänzend und störungsfrei. Nach Ablauf von 10 bis 14 Tagen ist der Härtungsprozeß abgeschlossen. Die Eigenschaften des Fertiglackes und des Filmes können wie folgt skizziert werden:

```
Gelierzeit:                      2,5 h

Antrocknung (Sand):              4 bis 8 h

Durchtrocknung (klebfrei):       8 bis 24 h

Optik (Glanz):                   sehr gut (Glanz)

Pendelhärte (Albert/König):      130 s



Lösemittelbeständigkeit
   Testbenzin:                       sehr gut

   Solventnaphtha 100:               sehr gut

   Methoxybutylacetat:               sehr gut

   Aceton:                           sehr gut

   Ethanol:                          sehr gut
```

Werden die Lacke nach einer Ablüftzeit von 30 Minuten bei Raumtemperatur 1 Stunde bei 140°C in Gegenwart von Feuchtigkeit (Wasserschale) forciert getrocknet, ergibt sich folgendes Eigenschaftsbild:

| Optik: | sehr gut |
| Pendelhärte: | 80 bis 90 s |
| Lösemittelbeständigkeit | |
| Testbenzin: | sehr gut |
| Solventnaphtha 100: | sehr gut |
| Methoxybutylacetat: | sehr gut |
| Aceton: | sehr gut |
| Ethanol: | sehr gut |

Beispiel 4

100 Gewichtsteile Polyisocyanat B werden mit 7,0 Gewichtsteilen eines handelsüblichen Mattierungsmittel (Deuteron MK, Fa. Schöner, Achim) und 3,3 Gewichtsteilen eines handelsüblichen Benetzungsadditives (Deuterol 201 E, Fa. Schöner, Achim) vermischt. Zur Langzeitstabilisierung wird noch 1 Gewichtsteil eines handelsüblichen Trockenmittels (Zusatzmittel Ti (Toluylsulfonylmonoisocyanat) Bayer AG, Leverkusen) hinzugefügt. Es erfolgt nun die Homogenisierung des Ansatzes mittels Schnellrührer, während 15 Minuten mit einer Drehgeschwindigkeit von 5 bis 10 m/Sek. Nach Sieben und Abkühlen werden der Formulierung 2 Gewichtsteile einer 10 gew.-%igen Katalysatorlösung in Solvesso 100 (Dibutylzinndilaurat, Fa. Akzo, Düren) zugefügt. Man erhält so eine wasserverdünnbare Formulierung zur Herstellung einer Polyharnstoffbeschichtung mit praktisch unbegrenzter Lagerstabilität. Nach Zugabe und Homogenisierung von 44 Gewichtsteilen Wasser unmittelbar vor der Verarbeitung resultiert ein verarbeitungsfertiges Material folgender Zusammensetzung:

| Polyisocyanat B | 63,5 Gew.-% |
|---|---|
| Additive | 2,8 Gew.-% |
| Mattierungsmittel | 4,5 Gew.-% |
| Wasser | 28,0 Gew.-% |
| Lösemittel | 1,2 Gew.-% |
| Gesamt | 100,0 Gew.-% |
| | |
| Gesamtfeststoff | 70,8 Gew.-% |

Falls gewünscht, kann der oben beschriebene Ansatz mit Wasser zusätzlich weiterverdünnt werden, um individuell gewünschte Verarbeitungskonsistenzen zu erhalten. Organische Lösemittel sind dazu nicht erforderlich. Der Ansatz enthält nur noch 1,2 Gew.-% organisches Lösemittel. Der verarbeitungsfertige Lack wird in einer Naßfilm-Schichtdicke von 200 µm (= 70 bis 80 µm trocken) auf Glasplatten appliziert. Der getrocknete Film ist glänzend und störungsfrei. Nach Ablauf von 10 bis 14 Tagen ist der Härtungsprozeß abgeschlossen. Die Eigenschaften des Fertiglackes und des Filmes können wie folgt skizziert werden:

| Gelierzeit: | 2,5 h |
|---|---|
| Antrocknung (Sand): | 4 bis 8 h |
| Durchtrocknung (klebfrei): | 8 bis 24 h |
| Optik (Glanz): | gut (Seidenmatt) |
| Pendelhärte (Albert/König): | 110 bis 120 s |
| Lösemittelbeständigkeit | |
| Testbenzin: | sehr gut |
| Solventnaphtha 100: | sehr gut |
| Methoxybutylacetat: | sehr gut |
| Aceton: | sehr gut |
| Ethanol: | sehr gut |

Werden die Lacke nach einer Ablüftzeit von 30 Minuten bei Raumtemperatur 1 Stunde bei 140°C in Gegenwart von Feuchtigkeit (Wasserschale) forciert getrocknet, ergibt sich folgendes Eigenschaftsbild:

| Optik: | gut (Seidenmatt) |
|---|---|
| Pendelhärte: | 140 bis 150 s |
| Lösemittelbeständigkeit | |
| Testbenzin: | sehr gut |
| Solventnaphtha 100: | sehr gut |
| Methoxybutylacetat: | sehr gut |
| Aceton: | sehr gut |
| Ethanol: | sehr gut |

Beispiel 5

100 Gew.-Teile Polyisocyanat B werden mit 0,3 Gew.-Teilen Dibutylzinndilaurat gemischt. Dieser gebrauchsfertige Ansatz ist während mehrerer Monate lagerstabil.

Kurz vor Beginn der Beschichtungsarbeiten werden den genannten 100,3 Gew.-Teilen katalysatorhaltigem Bindemittel 40 Gew.-Teile Wasser zugesetzt und der Ansatz per Bohrmaschine mit Rühraufsatz homogen verrührt. Anschließend werden 1200 Gew.-Teile eines Blähtongranulats einer Korngröße von 3 bis 5 mm zugesetzt und das Gemisch in einer Beton-Mischmaschine homogenisiert. Danach wird das Gemisch in einer Schichtdicke von 3 cm im Freien auf eine Betonfläche aufgetragen. Die beschichteten Flächen sind nach eintägiger Härtungszeit im Freien (trockenes herbstliches Wetter) begehbar und nach 1 Woche voll belastungsfähig.

Beispiel 6

Beispiel 5 wird wiederholt mit folgenden Änderungen: 140,3 Gew.-Teile der in Beispiel 5 genannten wäßrigen Bindemittellösung werden mit 2300 Gew.-Teilen eines Zierkiesgranulats mit einer Korngröße von 5 bis 8 mm gemischt.

Die weitere Verarbeitung erfolgt wie in Beispiel 5 angegeben. Es resultiert eine nach einwöchiger Härtung voll belastbare Zierkies-Beschichtung.

**Patentansprüche**

1. Verfahren zur Herstellung von Beschichtungen auf beliebigen wasserresistenten Substraten unter Verwendung eines wäßrigen Beschichtungsmittels, bestehend im wesentlichen aus

   a) einem Bindemittel,

   b) Wasser,
   und gegebenenfalls

   c) üblichen, aus der Beschichtungstechnologie bekannten Hilfs- und Zusatzmitteln,

   dadurch gekennzeichnet, daß das Bindemittel a) ein unter dem Einfluß von Feuchtigkeit unter Ausbildung von Polyharnstoffstrukturen aushärtbares, aufgrund einer hydrophilen Modifizierung mit Wasser verträgliches organisches Polyisocyanat oder Polyisocyanatgemisch mit 10 bis 23 Gew.-% an aliphatischen oder cycloaliphatischen Isocyanatgruppen, einer Viskosität bei 23° C von 100 bis 5000 mPa.s, einer NCO-Funktionalität von 2 bis 4 und einem Gehalt an innerhalb von Polyetherketten angeordneten Ethylenoxideinheiten (berechnet als $C_2H_4O$, Molekulargewicht = 44) von 1 bis 20 Gew.-% darstellt.

2. Verfahren gemäß Anspruch 1, dadurch gekennzeichnet, daß die Komponenten a) und b) in Form einer WO- oder OW-Emulsion vorliegen, in der die gegebenenfalls mitverwendeten Komponenten c) gelöst und/oder dispergiert sind.

3. Verfahren gemäß Anspruch 1 und 2, dadurch gekennzeichnet, daß in dem Beschichtungsmittel pro 100 Gew.-Teilen der Komponente a) 2 bis 400 Gew.-Teile Wasser vorliegen.

4. Verfahren gemäß Anspruch 1 bis 3, dadurch gekennzeichnet, daß man als Komponente c) eine wasserverdünnbare Pigmentanreibung, gegebenenfalls neben weiteren Hilfs- und Zusatzmitteln c) verwendet.

5. Verfahren gemäß Anspruch 1, dadurch gekennzeichnet, daß man als Komponente c) Füllstoffe, ausgewählt aus der Gruppe bestehend aus (i) Sand unterschiedlicher Granulometrie inklusive Bunt- oder Ziersand, (ii) Kies inklusive Zierkies mit einer Korngröße von bis zu 10 mm, (iii) Blähton-Granulat einer Korngröße von bis zu 10 mm, (iv) Kunststoffgranulaten einer Korngröße bis zu 10 mm und (v) Gemischen derartiger Füllstoffe, gegebenenfalls neben sonstigen Hilfs- und Zusatzmitteln c) verwendet, wobei pro 100 Gew.-Teilen der genannten Füllstoffe 2 bis 20 Gew.-Teile des Bindemittels a) zum Einsatz gelangen.

**Claims**

1. A process for the preparation of coatings on any desired water-resistant substrates using an aqueous coating composition consisting essentially of

a) a binder,

b) water
and optionally

c) conventional auxiliary substances and additives known from coating technology,

characterized in that the binder a) is an organic polyisocyanate or polyisocyanate mixture containing 10 to 23 wt. % of aliphatic or cycloaliphatic isocyanate groups and having a viscosity at 23°C of 100 to 5000 mPa.s, an NCO functionality of 2 to 4 and a content of ethylene oxide units located within polyether chains (calculated as $C_2H_4O$, molecular weight = 44) of 1 to 20 wt.%, said polyisocyanate or polyisocyanate mixture being compatible with water due to a hydrophilic modification and curing under the effect of moisture to form polyurea structures.

2. A process according to Claim 1, characterized in that components a) and b) are present in the form of a W/O or O/W emulsion in which components c), if used, are dissolved and/or dispersed.

3. A process according to Claims 1 and 2, characterized in that 2 to 400 parts by weight of water are present per 100 parts by weight of component a) in the coating composition.

4. A process according to Claims 1 to 3, characterized in that a water-dilutable pigment grinding is used as component c), optionally in addition to other auxiliary substances and additives c)

5. A process according to Claim 1, characterized in that fillers selected from the group comprising (i) sand of different particle sizes, including coloured or decorative sand, (ii) gravel, including decorative gravel, with a particle size of up to 10 mm, (iii) expanded clay granules with a particle size of up to 10 mm, (iv) plastics granules with a particle size of up to 10 mm, and (v) mixtures of such fillers, are used as component c), optionally in addition to other auxiliary substances and additives c), 2 to 20 parts by weight of the binder a) being used per 100 parts by weight of said fillers.

**Revendications**

1. Procédé pour la préparation d'enductions sur n'importe quels substrats résistant à l'eau, en utilisant un agent d'enduction aqueux, constitués essentiellement par

a) un liant

b) de l'eau
et éventuellement

c) des adjuvants et des additifs habituels connus de la technologie d'enduction,

caractérisé en ce que le liant a) représente un polyisocyanate organique ou un mélange de polyisocyanates organiques acceptant l'eau sur base d'une modification hydrophile et aptes à durcir sous l'influence de l'humidité en formant des structures de polyurée, contenant de 10 à 23% en poids de groupes isocyanate aliphatiques ou cycloaliphatiques, possédant une viscosité à 23°C de 100 à 5000 mPa.s, une fonctionnalité NCO de 2 à 4 et une teneur en unités d'oxyde d'éthylène (calculées comme $C_2H_4O$, poids moléculaire = 44) incorporées dans des chaînes polyéthers de 1 à 20% en poids.

2. Procédé selon la revendication 1, caractérisé en ce que les composants a) et b) sont présents sous forme d'une émulsion eau-dans-l'huile ou huile-dans-l'eau dans laquelle les composants c) éventuellement utilisés de manière conjointe sont dissous et/ou dispersés.

3. Procédé selon les revendications 1 et 2, caractérisé en ce que, dans l'agent d'enduction, sont présentes, par 100 parties en poids du composant a), de 2 à 400 parties en poids d'eau.

4. Procédé selon les revendications 1 à 3, caractérisé en ce que, comme composant c), on utilise un pigment apte à être dilué avec de l'eau, introduit par trituration, éventuellement accompagné d'autres adjuvants et additifs c).

**5.** Procédé selon la revendication 1, caractérisé en ce que, comme composant c), on utilise des substances de remplissage choisies parmi le groupe constitué par (i) du sable de granulométrie différente, y compris du sable coloré ou du sable d'ornementation, (ii) du gravier, y compris du gravier d'ornementation possédant une granulométrie allant jusqu'à 10 mm, (iii) des produits de granulation d'argile expansée possédant une granulométrie allant jusqu'à 10 mm, (iv) des produits de granulation de substances synthétiques possédant une granulométrie allant jusqu'à 10 mm et (v) des mélanges de substances de remplissage de ce type accompagnées éventuellement d'autres adjuvants et additifs c), dans lequel, par 100 parties en poids des substances de remplissage mentionnées, on met en oeuvre de 2 à 20 parties en poids du liant a).